(19) Europäisches Patentamt
European Patent Office
Office européen des brevets

(11) EP 1 754 740 A2

(12) # EUROPÄISCHE PATENTANMELDUNG

(43) Veröffentlichungstag:
**21.02.2007 Patentblatt 2007/08**

(51) Int Cl.:
***C08G 77/06*** *(2006.01)*

(21) Anmeldenummer: **06016390.4**

(22) Anmeldetag: **05.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.08.2005 DE 102005039398**

(71) Anmelder: **Goldschmidt GmbH**
**45127 Essen (DE)**

(72) Erfinder:
- **Henning, Frauke, Dr.**
**45276 Essen (DE)**
- **Knott, Wilfried, Dr.**
**45355 Essen (DE)**

(54) **Verfahren zur Herstellung von Anlagerungsprodukten aus SiH-Gruppen enthaltenden Verbindungen an eine Doppelbindung aufweisenden Reaktionspatner in wässrigen Medien**

(57) Gegenstand der Erfindung ist ein Verfahren zur Herstellung von organisch modifizierten Siloxanen und Silanen durch Edelmetallkatalysierte Umsetzung von mindestens eine SiH-Gruppe aufweisenden Siloxanen und Silanen mit einer eine Doppelbindung aufweisenden Verbindung, welches dadurch gekennzeichnet ist, dass die Reaktion in Gegenwart von Wasser durchgeführt wird.

EP 1 754 740 A2

## Beschreibung

Die Erfindung betrifft ein neues Verfahren zur Herstellung von Anlagerungsprodukten aus SiH-Gruppen enthaltenden Verbindungen an eine Doppelbindung aufweisende Reaktionspartner in wässrigen Medien.

Die Edelmetall-katalysierte Hydrosilylierungsreaktion erschließt durch die Vielzahl an Kombinationsmöglichkeiten zwischen SiH-Gruppen enthaltenden Silanen bzw. Siloxanen und olefinisch ungesättigten Verbindungen ein breites Spektrum modifizierter Silane bzw. Siloxane.

Es ist bekannt, dass man bei der Auswahl geeigneter Solventien in der Hydrosilylierungsreaktion weitgehend eingeschränkt ist, insbesondere was die Verwendung von Alkoholen und insbesondere Wasser betrifft. Sind solche Lösungsmittel zugegen, tritt die SiC-Verknüpfungsreaktion gegenüber der SiOC-Bindungsbildung in den Hintergrund und es findet Alkoholyse bzw. Hydrolyse der reaktiven SiH-Funktion statt (Michael A. Brook, Silicon in Organic, Organometallic and Polymer Chemistry, John Wiley and Sons, Inc., New York, 1999, S. 176, S. 406).

Eine Ausnahme von dieser Wasser- und Luft-induzierten Degradation aktiven SiH's bildet die hoch effiziente, stereoselektive und bei Raumtemperatur durchgeführte Hydrosilylierung terminaler Alkine mit Triethylsilan in Gegenwart eines Aminophosphin-modifizierten Divinyl-tetramethyldisiloxan-platin-Komplexes (Chemical Communications (Cambridge, United Kingdom) 2003, 14, 1668-1669).

Die hohe Reaktivität der eingesetzten terminalen Alkine als auch des niedermolekularen Silankörpers sichern durch eine hohe Umsatzgeschwindigkeit eine Präferenz für die angestrebte SiC-Verknüpfungsreaktion und machen die Ausnahmesituation im beschriebenen System deutlich.

Die US-B-6 878 733 beschreibt die Herstellung von $(AB)_n$-Blockcopolymeren durch kettenverlängernde Emulsionspolyaddition von zwei terminalen SiH-Gruppen aufweisenden Polydiorganosiloxanen mit zwei endständigen Doppelbindungen aufweisenden hochmolekularen Kohlenwasserstoffen in Wasser und in Gegenwart von Emulgatoren. Diese Doppelbindungen weisen durch die in Nachbarstellung anwesenden Substituenten mit Elektronendonator-Eigenschaften ebenfalls eine deutlich erhöhte Reaktivität auf.

Überraschenderweise wurde nun gefunden, dass man auch Stoffsysteme deutlich niedrigerer Reaktivität, wie Olefinfunktionen aufweisende Substrate, wie z. B. Vinyl- und/oder Allylpolyoxyalkylenverbindungen mit sowohl terminalen als auch nichtterminalen SiH-Gruppen tragenden Verbindungen, wie z. B. Wasserstoffsiloxanen nur in Gegenwart von Wasser als Reaktionsmedium unter den Bedingungen einer Übergangsmetall-katalysierten Hydrosilylierung kontrolliert umsetzen kann. Umso erstaunlicher ist hierbei, dass konkurrierende Nebenreaktionen wie z. B. die SiOC-Verknüpfung, die in rein organischen Solventien beobachtet wird, kaum stattfinden. Dieses Verhalten ist für den Fachmann vollkommen unerwartet, da die hydridisch polarisierte SiH-Bindung bei Reaktion mit ambidenten Substraten (Olefinfunktion und Hydroxyfunktion im Molekül vertreten) selbst bei Abwesenheit von Wasser die Tendenz zur Bildung SiOCbasierender Nebenprodukte zeigt.

Ein Gegenstand der Erfindung ist daher ein Verfahren zur Herstellung von organisch modifizierten Siloxanen und Silanen durch Edelmetall-katalysierte Umsetzung von

a) mindestens eine SiH-Gruppe aufweisenden Siloxanen und/oder Silanen mit
b) Verbindungen die eine Doppelbindung im Molekül aufweisen, welches dadurch gekennzeichnet ist, dass die Reaktion in
c) Wasser als Reaktionsmedium

durchgeführt wird.

Ein weiterer Gegenstand der Erfindung ist daher ein Verfahren zur Herstellung von organisch modifizierten Siloxanen und Silanen durch Edelmetall-katalysierte Umsetzung von

a) mindestens eine nicht-terminale SiH-Gruppe aufweisenden Siloxanen und/oder Silanen mit
b) Verbindungen die eine Doppelbindung im Molekül aufweisen, welches dadurch gekennzeichnet ist, dass die Reaktion in
c) Wasser als Reaktionsmedium

durchgeführt wird.

Ein weiterer Gegenstand der Erfindung sind wässrige Reaktionsmischungen, hergestellt durch Edelmetall-katalysierte Umsetzung von

a) mindestens eine terminale und/oder mindestens eine nicht-terminale SiH-Gruppe aufweisenden Siloxanen und/oder Silanen mit
b) Verbindungen die eine Doppelbindung im Molekül aufweisen, welches dadurch gekennzeichnet ist, dass die Reaktion in Gegenwart von

c) Wasser als Reaktionsmedium

durchgeführt wird.

Die Durchführbarkeit des Verfahrens nur in Wasser, d.h. ohne die zusätzliche Mitverwendung von Lösungsmitteln, Lösungsvermittlern oder Emulgatoren, war aufgrund der bekannten unterschiedlichen Löslichkeitscharakteristiken der Edukte sowie der Natur der verwendeten Katalysatoren nicht vorraussehbar. Überraschend war insbesondere der selektive Verlauf der Reaktion, d.h. der geringe Anteil an unerwünschten Nebenprodukten.

Weitere Gegenstände der Erfindung sind gekennzeichnet durch die Inhalte der Unteransprüche.

Als Katalysatoren geeignet sind Metallkomplexe der Metalle der VIII. Nebengruppe des PSE und hiervon besonders die Vertreter der Platinmetalle.

Erfindungsgemäß bevorzugt werden Platinkatalysatoren verwendet. Deren Verwendung für die Hydrosilylierung von Silanen oder Siloxanen mit SiH-Gruppen an Verbindungen mit einer oder mehreren olefinischen Doppelbindungen ist bekannt und z. B. in dem Buch "Chemie und Technologie der Silicone", Verlag Chemie, 1960, Seite 43, und in der Patentliteratur, z. B. in der DE-B-26 46 726, der EP-A-0 075 703 beschrieben.

Als Edelmetallkatalysatoren zur hier erfindungsgemäß beanspruchten Hydrosilylierung in Gegenwart von Wasser eignen sich prinzipiell die in organischer Matrix bewährten Platinmetallkomplexe wie zum Beispiel der Karstedt-Katalysator, cis-Diamminoplatin (II) chlorid, Bis-μ-chloro($\eta^2$-cyclohexen)platin(II)chlorid u.a. (US-A-3 516 946, US-A-4 288 345).

Bevorzugt sind die Platin$^{(0)}$-Komplexkatalysatoren, wie beispielsweise die bekannten Platinkomplexe ungesättigter Siloxane, Silane, Organopolysiloxane und Organosilane gemäß US-A-3 814 730 oder WO-A-98/00463 und die so genannten Karstedt-Katalysatoren gemäß US-A-3 775 452.

Darüber hinaus eignen sich aber auch andere nullwertige Platin-Olefinkomplexe wie z. B. Bis-1,5-cyclooctadien-platin$^{(0)}$ und Tris-norbornen-platin$^{(0)}$, Di-platin-tris(heptadien-1,6), Platin-($\eta^2$,$\eta^2$-1,2,6,7-heptadien-1,6) ($\eta^2$-1,2-heptadien-1,6) und Platin-($\eta^2$-ethylen) ($\eta^2$,$\eta^2$-1,2,6,7-heptadien-1,6).

Insbesondere bevorzugt werden erfindungsgemäß Olefin-modifizierte Platin$^{(0)}$-Katalysatoren, so genannte WK-Katalysatoren, wie sie in der EP-A-1 520 870 beschrieben werden.

Der Inhalt des Buches "Chemie und Technologie der Silicone", Verlag Chemie, 1960, der DE-B-26 46 726, EP-A-0 075 703, WO 98/00463, US-A-3 516 946, US-A-3 814 730, US-A-3 775 452, US-A-4 288 345, EP-A-1 520 870 wird hiermit als Referenz eingeführt und gilt als Teil des Offenbarungsgehaltes der vorliegenden Erfindung.

Die Katalysatorkomplexe werden als Feststoffe oder in Form von Katalysatorlösungen eingesetzt. Die Katalysatorlösungen werden in den für Hydrosilylierungsreaktionen üblichen systemabhängigen Konzentrationen verwendet. Die einzusetzende Menge an Platinkatalysator richtet sich im Wesentlichen nach Reaktivität und dem Molekulargewicht der Reaktionspartner. Im Allgemeinen verwendet man $10^{-2}$ bis $10^{-8}$ Mol, vorzugsweise $10^{-3}$ bis $10^{-6}$ Mol der Katalysatoren auf jeweils 1 Mol SiH-Gruppen im Silan oder Siloxan.

Die Katalysatoren können über einen weiten Temperaturbereich eingesetzt werden. Zur Vermeidung von Nebenreaktionen wird vorzugsweise der Temperaturbereich so niedrig gewählt, dass er einen akzeptablen Kompromiss zwischen angestrebter Produktreinheit und Produktionsleistung darstellt. Die erfindungsgemäß bevorzugten, Olefin-aktivierten Systeme katalysieren unter schwacher Exothermie zufriedenstellend bereits ab 50° C. Zur Erzielung höherer Durchsatzraten kann die Umsetzungstemperatur auch erheblich erhöht werden, ohne dass es zu Desaktivier- und Abschaltphänomenen kommt.

Üblicherweise werden die erfindungsgemäß beanspruchten Reaktionen unter atmosphärischem Druck, gegebenenfalls jedoch auch unter erhöhtem Druck durchgeführt.

Erfindungsgemäß bevorzugt wird das Verfahren bei Normaldruck durchgeführt, davon abweichende Druckbereiche sind - falls erwünscht - jedoch ebenfalls möglich.

Die Reaktionspartner, d.h. die SiH-Gruppen aufweisenden Silane oder Siloxane sowie die olefinische Doppelbindungen aufweisenden organischen Verbindungen und Verfahren zu deren Herstellung sind bekannt. Die Silane oder Siloxane sind z. B. in dem Buch "Chemie und Technologie der Silicone", Verlag Chemie, 1960, beschrieben.

Die SiH-Gruppen in den Siloxanen und Silanen können terminal und/oder nicht-terminal sein.

Erfindungsgemäß verwendbare Siloxane sind Verbindungen der allgemeinen Formel (I)

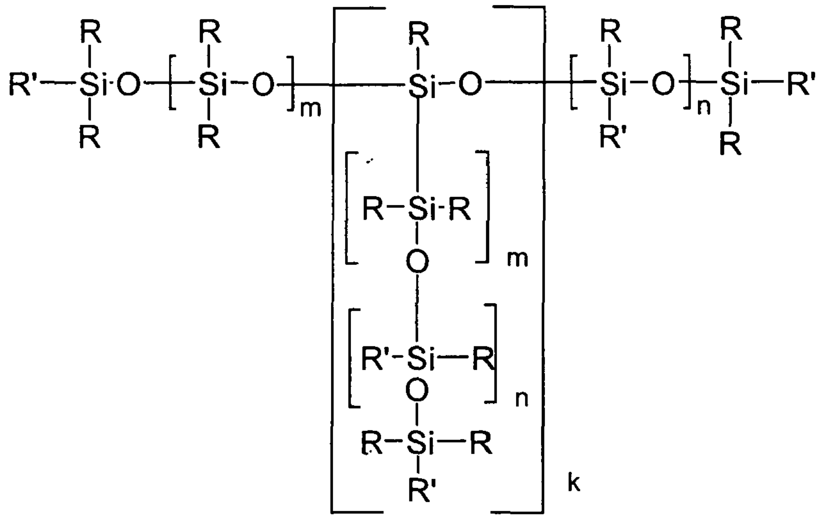

(I)

worin

R ein Kohlenwasserstoffrest mit 1 bis zu 20 C-Atomen sein kann, vorzugsweise eine Methylgruppe ist,
R' Wasserstoff und/oder R sein kann,
m 0 bis 500, vorzugsweise 10 bis 200, insbesondere 15 bis 100,
n 0 bis 60, vorzugsweise 0 bis 30, insbesondere 0,1 bis 25,
k 0 bis 10, vorzugsweise 0 bis 4, ist,

mit der Maßgabe, dass R' mindestens einmal Wasserstoff ist.

Die Siloxane sind technische Produkte, in denen die einzelnen Bestandteile der in der allgemeinen Formel (I) in Klammern aufgeführten Teile statistisch verteilt als auch blockweise enthalten sein können, sie können, durch die Herstellung bedingt, auch größere Anteile an Verzweigungen enthalten. Die erfindungsgemäß bevorzugten Verbindungen sind im Wesentlichen linear. In Anteilen von 50 %, vorzugsweise > 90 % sind die Reste R kurzkettige Alkylreste, insbesondere Methylreste.

Erfindungsgemäß verwendbare Silane sind Verbindungen der allgemeinen Formel $(R)_a$-$SiH_{4-a}$, worin R, gleich oder verschieden, die oben genannte Bedeutung hat, vorzugsweise ein gegebenenfalls substituierter Alkylrest mit 1 bis 8 C-Atomen ist und a 1 bis 3 sein kann.

Beispiele geeigneter bevorzugter siliciumorganischer Verbindungen mit SiH-Gruppen sind:

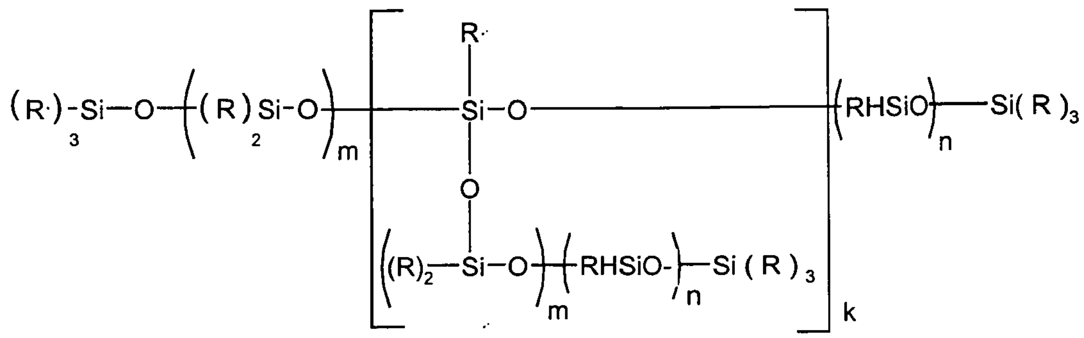

Dabei bedeutet R in den vorgenannten Formeln Gruppen, die die Anlagerungsreaktion nicht behindern, wie Alkylgruppen mit 1 bis 8 Kohlenstoffatomen; substituierte Alkylgruppen mit 1 bis 8 Kohlenstoffatomen, wie die 3-Chlorpropyl-, 1-Chlor-methyl-, 3-Cyanopropylgruppe; Arylgruppen, wie die Phenyl-gruppe; Aralkylgruppen, wie die Benzylgruppe; Alkoxy- oder Alkoxyalkylgruppen, wie die Ethoxy- oder Ethoxypropylgruppe. Dabei kann innerhalb eines Moleküls R auch verschiedene Bedeutungen haben. Bevorzugt sind jedoch Verbindungen, bei denen alle Reste R oder deren

überwiegende Zahl die Bedeutung eines Methylrestes haben.

Beispiele für die SiH-funktionellen Verbindungen sind:

- monomere Silane, wie z. B. $R_3SiH$; $R_2SiH_2$; $RSiH_3$;
- cyclische Siloxane, wie z. B. $(RHSiO\}_4$; $(RHSiO\}_3$;
- lineare oder verzweigte oligomere oder polymere Siloxane wie $R_3SiO-(R_2SiO-)_a(RSi(H)O-)_bSiR_3$, wobei a ≥ 0 und b ≥ 1 sind; $HR_2SiO-(R_2SiO-\}_c(RSi(H)O-)_dSiR_2H$, wobei c und d ≥ O sind.

Erfindungsgemäß verwendbare eine Doppelbindung pro Molekül aufweisende Verbindung gemäß b) sind Verbindungen der allgemeinen Formel $CH_2=CH-(CH_2)_b-Rb$ (III),
worin

b 0 oder 1 sein kann und
Rb ein Kohlenwasserstoffrest $-(O)_{x'}-R^{IV}$

worin

x' 0 oder 1,
$R^{IV}$ ein gegebenenfalls substituierter Kohlenwasserstoffrest mit 7 bis 47, vorzugsweise 13 bis 37 C-Atomen sein kann, oder Rb ein Polyetherrest der allgemeinen Formel $-O-P_E$ ist,

worin

$P_E$ ein beliebiger Homo- oder Mischpolyether mit blockweiser Anordnung oder statistischer Verteilung der Polyethersegmente $-(CH_2-CH(R_S)O)-R''$

worin

R'' ein Wasserstoffrest oder eine Alkylgruppe mit 1 bis 4 C-Atomen; die Gruppe -C(O)-R''' mit R''' = Alkylrest; die Gruppe $-CH_2-O-R'$; eine Alkylarylgruppe, wie die Benzylgruppe; die Gruppe -C(O)NH-R', $-SO_3^-K^+$, $-COO^-K^+$ und $K^+$ Wasserstoff oder ein organisches oder anorganisches Kation bedeutet und
$R_s$ gleich oder verschieden Wasserstoff-, $C_{1-4}$-Alkyl- oder Arylreste sein können.

Art und Anzahl der einzelnen Polyethersegmente sowie deren Verteilung ist für das erfindungsgemäße Verfahren an sich unkritisch und wird in erster Linie bestimmt durch den jeweiligen Anwendungszweck der Reaktionsprodukte und ist dem einschlägigen Fachmann bekannt.

Beispiele geeigneter kohlenstofforganischer Verbindungen mit olefinischen Doppelbindungen sind Verbindungen der Formeln

$$CH_2=CH-CH_2-O-(CH_2-CH_2O-)_x-(CH_2-CH(R')O-)_y-(SO)_z-R''$$

$$CH_2=CH-O-(CH_2-CH_2O-)_x-(CH_2-CH(R'O-)_y-R''$$

$$CH_2=CH-CH_2-R^{IV}$$

$$CH_2=CH-(O)_{x'}-R^{IV}$$

worin

x = 0 bis 100,
x' = 0 oder 1,
y = 0 bis 100,
z = 0 bis 100,

R' eine gegebenenfalls substituierte Alkylgruppe mit 1 bis 4 C-Atomen ist und
R'' einen Wasserstoffrest oder eine Alkylgruppe mit 1 bis 4 C-Atomen; die Gruppe -C(O)-R''' mit R''' = Alkylrest; die Gruppe $-CH_2-O-R'$; eine Alkylarylgruppe, wie die Benzylgruppe; die Gruppe -C(O)NH-R', $-SO_3^-K^+$ $-COO^-K^+$ mit $K^+$ = Wasserstoff oder ein organisches oder anorganisches Kation bedeutet,

$R^{IV}$ ein gegebenenfalls substituierter Kohlenwasserstoffrest mit 7 bis 47, vorzugsweise 13 bis 37 C-Atomen ist,
SO der Rest $-CH(C_6H_5)-CH_2-O-$,

bedeutet.

Ferner sind beispielsweise Verbindungen der Formeln

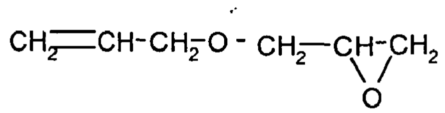

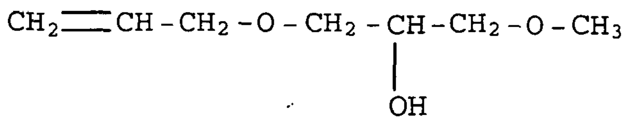

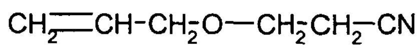

geeignet.

Die hier erfindungsgemäß beanspruchte technische Lehre einer im wässrigen Medium durchzuführenden Hydrosilylierung olefinischer Substrate ist insbesondere vor dem Hintergrund einer zunehmend verstärkten Nutzung tensidisch aktiver Substanzen in Form wässriger Zubereitungen interessant. Die Forderung nach lösungsmittelfreien Anstrichs- und Lacksystemen ganz allgemein hat sich zunehmend auch auf anspruchsvolle Anwendungsbereiche ausgedehnt, wie z. B. wasserbasierende Lacksysteme auch im Automobilbereich einzusetzen.

So erschließt das erfindungsgemäße Verfahren in einfacher Weise Zugang zu direktverwendbaren Pigmentnetzmitteln bzw. Dispergieradditiven, die sich z. B. als Formulierung von styroloxidhaltigen Polyethersiloxanen in Wasser darstellen.

Eine unerwünschte Nebenreaktion bei der Hydrosilylierung von Allylpolyethern ist deren Umlagerung zu den thermodynamisch begünstigten jedoch nicht mehr anlagerungsfähigen Propenylpolyethern. Daher muss die Allylkomponente üblicherweise im Überschuss eingesetzt werden. Die durch Säurespuren und Feuchtigkeit ausgelöste Hydrolyse des im Endprodukt enthaltenen Propenylpolyethers führt zur Entstehung von Propionaldehyd und dessen Oligomeren (Aldoxane, Trioxane), die zeitverzögert aus dem Siliconpolyether austreten und somit für dessen Geruchsbehaftung verantwortlich sind. Der hydrolyseinstabile Propenylpolyether fungiert dabei als eine Art von Reservoir, aus dem kontinuierlich Geruchsträger nachgebildet werden. Der Stand der Technik offenbart recht unterschiedliche Methoden zur Vermeidung oder Behebung der dargestellten Problematik bei Allylpolyether basierenden Systemen:

Die EP-A-0 118 824 beschreibt Organopolysiloxan-Polyoxyalkylen-Copolymere als Öle für kosmetische Zwekke mit einem Gesamtgehalt an Carbonylgruppen tragenden Verbindungen (Aldehyde + Ketone) ≤ 100 ppm und einem Peroxidgehalt ≤ 5 Milliäquivalenten/kg Substanz, die dadurch erhalten werden, dass man Antioxidantien in Mengen von 5 bis 1.000 ppm, gegebenenfalls in Gegenwart eines Puffers, bei der hydrosilylierenden Verknüpfung von bereits sehr reinen Allylpolyethern einsetzt.

Die JP-A-07304627 lehrt ein Verfahren zur Behandlung von Allylpolyether tragenden Organosiloxanen durch Vermischen derselben mit wässriger Salzsäure bei 60 °C im Verlauf von 24 Stunden. Der erzielte Aldehydgehalt beträgt ≤ 100 ppm und die Geruchsprüfung verläuft negativ.

Ein vergleichbares Vorgehen zur Säure-induzierten Hydrolyse von Propenylpolyetheranteilen unter Freisetzung und der damit ermöglichten Abtrennung von Propionaldehyd ist in J. Soc. Cosmet. Chem. Japan (1993), 27(3), 297-303 beschrieben.

Die DE-A-41 16 419 stellt auf die Beseitigung unerwünschter Geruchsquellen im Allylpolyethersiloxan durch heterogen-katalytische Druckhydrierung an Nickel/Kieselgur-Kontakten ab, wobei farblos klare Produkte ohne penetranten Geruch erhalten werden, die im wässrig-sauren System und in einem pH-Bereich von 3 bis 4 über einen Zeitraum von 6 Wochen stabil sind.

Die EP-A-0 398 684 beschreibt die Herstellung geruchsarmer Polyoxyalkylen-Silicon-Blockcopolymere in der Weise, dass man ein Wasserstoffsiloxan mit Allylpolyethern in Ethanol Pt-katalysiert zur Umsetzung bringt, das Reaktionsgemisch mit einer verdünnten Salzsäurelösung in der Hitze für einige Stunden behandelt und dann einer Vakuumdestillation unterzieht, wobei ein nahezu geruchloses Copolymer gewonnen wird.

Weiter ist im Stand der Technik die Möglichkeit beschrieben, unerwünschten Geruch in Allylpolyethersiloxanen durch den Zusatz geringer Mengen an Phytinsäure zu unterdrücken, die jedoch im System verbleibt (JP-A-60018525).

Welche Nebenwege zur Vermeidung der aus der Allylpolyether-Isomerisierung resultierenden Probleme beschritten werden, wird beispielsweise in der EP-A-0 308 260 offenbart, die ein Verfahren zur Herstellung hochreiner Oxyalkylen-modifizierter Organopolysiloxane unter Nutzung von Vinyloxy-terminierten Polyethern beansprucht. Dieser Herstellungsweg ist aus Gründen begrenzter Verfügbarkeit und erhöhter Rohstoffkosten nicht beliebig erweiterbar.

Auch die JP-A-09012723 bedient sich einer Vermeidungsstrategie, die Wasserstoffatome in Position 3 der Polyethergebundenen Allylgruppe durch Kohlenwasserstoffsubstituenten ersetzt. Naturgemäß erleidet ein derartig abgewandeltes System keine Allyl-Propenyl-Umlagerung während der Hydrosilylierung.

Zum Stand der Technik beschreibt die EP-A-1 431 331 ein Verfahren, bei dem die Polyethersiloxane zunächst mit $H_2O_2$ behandelt und dann nach den an sich bekannten Trennmethoden von flüchtigen Bestandteilen befreit werden.

Das Patent US-B-6 437 162 beschreibt die Behandlung von Dimethicon-Copolyol-Verbindungen mit Wasser in der Hitze mit anschliessender Destillation. Gesucht wird ein Herstellverfahren für organomodifizierte Silicone, das Nebenproduktbildung bereits während der Synthese erniedrigt.

Überraschenderweise eröffnet das hier erfindungsgemäß beanspruchte Verfahren insbesondere bei der Herstellung von Polyethersiloxanen, die sich aus der Platinmetall katalysierten Anlagerung von Allylpolyethern an SiH-Gruppen aufweisende Siloxane ableiten, die Möglichkeit, den Anteil der olfaktorisch unerwünschten Nebenprodukte bereits während der Synthese zu reduzieren.

Darüber hinaus bietet das erfindungsgemäß beanspruchte Verfahren die Möglichkeit, das aus dem Reaktionsmedium stammende Wasser in-situ in intensiverer Weise in Polyethersiloxane einzuarbeiten bzw. zu inkorporieren als es über den Weg der Umsetzung eines ungesättigten Polyethers mit einem Wasserstoffsiloxan - ob in Substanz oder in einem organischen Solvens - und nachträglicher Behandlung mit Wasser möglich ist.

Dieser Effekt lässt sich z. B. durch den direkten Vergleich der Viskositäten eines im wässrigen Medium hergestellten Polyethersiloxans und eines in Substanz gewonnenen strukturidentischen Polyethersiloxans, das anschließend in Wasser gelöst wurde, belegen. Dieser Aspekt ist für die Verwendung des wassertragenden Polyethersiloxans in allen wasserbasierenden Formulierungen von Bedeutung, in denen die rheologischen Eigenschaften durch hohe Viskositäten beeinträchtigt werden.

Die erfindungsgemäß hergestellten Organosiloxane und/oder Organosiloxan-Wasser-Systeme können anstelle der für alle jeweiligen Anwendungszwecke in Haushalt und Industrie sowie in Reinigungs- und Pflegemitteln für Haut und Hautanhangsgebilde verwendeten aber konventionell hergestellten organomodifizierten Organosiloxane und der darauf basierenden wässrigen Systeme verwendet werden. Auf Grund der überaus vorteilhaften rheologischen Eigenschaften sind sie darüber hinaus auch für bislang unzugängliche Anwendungsgebiete verwendbar.

Beispielsweise aber nicht abschließend sind dies Pigmentnetzmittel oder Dispergieradditive zur Herstellung von homogenen, lagerstabilen Pasten, Farben, Lacken, Überzügen, Beschichtungen, Anstrichmitteln; in Antitranspirantien/Deodorantien, sowie in pharmazeutischen Formulierungen.

Ein weiterer Gegenstand der Erfindung ist der Einsatz der erfindungsgemäß hergestellten Organosiloxane bzw. Organosiloxan-Wasser-Systeme in Mitteln zur Reinigung und Pflege harter Oberflächen, sowie zur Ausrüstung, Reinigung und Pflege von Textilien.

Ein weiterer Gegenstand der Erfindung ist die Verwendung der verfahrensgemäß hergestellten organomodifizierten Organosiloxane bzw. Organosiloxan-Wasser-Systeme bei der Behandlung und Nachbehandlung von Textilien, z. B.als Reinigungs- und Pflegemittel, als Imprägniermittel, Avivagehilfsmittel und Griffverbesserer und Textilweichmacher.

Ein weiterer Gegenstand der Erfindung ist die Verwendung der erfindungsgemäß hergestellten Organosiloxane bzw. Organosiloxan-Wasser-Systeme bei der Herstellung von Polyurethanschäumen, z. B. als Schaumstabilisatoren, Zellöffner, Trennmittel, etc.

Das Verfahren wird im Allgemeinen so durchgeführt, dass die SiH-Verbindungen a) zumindest teilweise, d.h. weitgehend, vorzugsweise aber möglichst vollständig mit der Doppelbindung der Komponente b) umgesetzt werden. Die Mengen an Wasser als Reaktionsmedium ist überwiegend unkritisch. Es wird vorzugsweise so bemessen, dass es in der Reaktionsmischung dem jeweiligen technischen Verwendungszweck entspricht, d.h. die Mischung direkt ihrem Verwendungszweck zugeführt werden kann. Vorzugsweise sollte das Wasser aber zu mindestens 50 Gew.-% der Gesamtreaktionsmischung ausmachen.

Das erfindungsgemäße Verfahren wird durch die folgenden Beispiele noch näher erläutert. Dabei werden die in den Beispielen genannten prozentualen SiH-Umsätze indirekt bestimmt, indem man das erhaltene Reaktionsprodukt mit n-Butanol in alkalischem Medium behandelt und die Menge noch abspaltbaren Wasserstoffs volumetrisch bestimmt.

Beispiel 1 (erfindungsgemäß)

In einem 500-ml-Vierhalskolben, ausgestattet mit KPG-Rührer, Innenthermometer und Rückflusskühler, werden 25 g eines Poly(methylhydrogen)dimethylsiloxan-Copolymeren mit einem Gehalt an aktivem Wasserstoff von 2,52 Val/g zusammen mit 69,04 g eines Allylpolyoxyalkylenols (mittleres Molekulargewicht ca. 843 g/Mol, Propylenoxydanteil/Ethylenoxydanteil = 29 : 71) in 94,04 g destilliertem Wasser unter Rühren vorgelegt.

Die Reaktionsmatrix wird auf 70° C erwärmt, dann werden 5 ppm eines Olefin-modifizierten Platin$^0$-WK-Katalysators (mit Olefin gesättigter Karstedt Katalysator $[H_2C=CH-Si(CH_3)_2-O-Si-(CH_3)_2-CH=CH_2]_3Pt_2$, wie in der EP-A-1 520 870 beschrieben) in Form einer 1,5 %-igen Lösung in Decamethylcyclopentasiloxan mittels einer Hamilton-Spritze hinzugegeben. Nach ca. 30 Minuten wird die zuvor trübe Reaktionsmischung klar. Der gasvolumetrisch bestimmte SiH-Umsatz nach 2 Stunden (Zersetzung einer eingewogenen Menge der Reaktionsmischung mit Hilfe einer Natriumbutylatlösung an einer Gasbürette) ist quantitativ.

Das klare, farblose Reaktionsprodukt zeigt im $^{29}$Si-NMR-Spektrum keinerlei Signallagen im Bereich eines SiOC-verknüpften Produktes. Die dynamische Viskosität der Probe liegt bei 206 mPas (25° C).

Beispiel 2 (nicht erfindungsgemäß)

In Analogie zu Beispiel 1 werden 25 g eines Poly(methylhydrogen)dimethylsiloxan-Copolymeren mit einem Gehalt an aktivem Wasserstoff von 2,52 Val/g zusammen mit 69,04 g eines Allylpolyoxyalkylenols (mittleres Molekulargewicht ca. 843 g/Mol, Propylenoxydanteil/Ethylenoxydanteil = 29 : 71) unter Rühren auf 70° C erwärmt, dann werden 5 ppm des Olefin-modifizierten Platin°-Katalysators gemäß Beispiel 1 in Form einer 1,5 %-igen Lösung in Decamethylcyclopentasiloxan mittels einer Hamilton-Spritze hinzugegeben.

Nach ca. 30 Minuten wird das zuvor trübe Reaktionssystem klar. Der gasvolumetrisch bestimmte SiH-Umsatz nach 2 Stunden (Zersetzung einer eingewogenen Menge der Reaktionsmischung mit Hilfe einer Natriumbutylatlösung an einer Gasbürette) ist quantitativ.

Das klare, gelb-bräunliche Polyethersiloxan besitzt eine dynamische Viskosität von ca. 450 mPaS und wird dann mit einem Anteil von 50 m-% in destilliertem Wasser gelöst. Die dynamische Viskosität der erhaltenen wässrigen Lösung wird zu 743 mPas bestimmt.

Beispiel 3 (nicht erfindungsgemäß)

12,07 g eines Poly(methylhydrogen)dimethylsiloxan-Copolymeren mit $\alpha,\omega$-SiH-Funktionen und einem mittleren Molekulargewicht von 2.778 g/Mol und mit einem SiH-Gehalt von 5,58 Val/kg werden zusammen mit 100 g eines Butandiolmonovinylether gestarteten Polyethers, der ein mittleres Molekulargewicht von ca. 1.100 g/Mol aufweist und zu 75 % aus Ethylenoxid- und zu 25 % aus Styroloxideinheiten besteht unter Rühren vorgelegt. Die Reaktionsmatrix wird auf 90° C erwärmt, dann werden 10 ppm eines Olefin-modifizierten Platin$^0$-Katalysators gemäß Beispiel 1 in Form einer 1,5 %-igen Lösung in Decamethylcyclopentasiloxan mittels einer Hamilton-Spritze hinzugegeben. Nach 3,5 Stunden werden weitere 5 ppm des hier bezeichneten Platinkatalysators hinzugegeben. Nach 5 Stunden liegt der gasvolumetrisch bestimmte SiH-Umsatz der braunen, trüben Reaktionsmischung bei 98,7 %. Eine Teilmenge des erhaltenen Polyethersiloxans wird mit destilliertem Wasser zu einer 40 %-igen, leicht-trüben Lösung verarbeitet. Das unverdünnte Produkt zeigt nach einigen Tagen der Lagerung die Neigung zur Phasenseparation und wird inhomogen.

Beispiel 4 (erfindungsgemäß)

In Analogie zu Beispiel 3 werden 12,07 g eines Poly(methylhydrogen)dimethylsiloxan-Copolymeren mit $\alpha,\omega$-SiH-Funktionen und einem mittleren Molekulargewicht von 2.778 g/Mol und mit einem SiH-Gehalt von 5,58 Val/kg zusammen mit 100 g eines Butandiolmonovinylether gestarteten Polyethers, der ein mittleres Molekulargewicht von ca. 1.100 g/Mol aufweist und zu 75 % aus Ethylenoxid- und zu 25 % aus Styroloxideinheiten besteht in 112,07 g destilliertem Wasser unter Rühren vorgelegt. Die Reaktionsmatrix wird auf 70° C erwärmt, dann werden 10 ppm eines Olefin-modifizierten Platin°-Katalysators gemäß Beispiel 1 in Form einer 1,5 %-igen Lösung in Decamethylcyclopentasiloxan mittels einer Hamilton-Spritze hinzugegeben. Nach 5 und 9 Stunden werden jeweils weitere 10 ppm des hier bezeichneten Platinkatalysators hinzugegeben. Nach 11 Stunden wird die zuvor trübe Reaktionsmischung klar. Nach 13 Stunden ist der gasvolumetrisch bestimmte SiH-Umsatz quantitativ.

Das klare, farblose Reaktionsprodukt zeigt im $^{29}$Si-NMR-Spektrum keinerlei Signallagen im Bereich eines SiOC-verknüpften Produktes.

Beispiel 5 (erfindungsgemäß)

In Analogie zu Beispiel 1 werden in einem 500-ml-Vierhalskolben ausgestattet mit KPG-Rührer, Innenthermometer und Rückflusskühler 25 g eines Poly(methylhydrogen)dimethylsiloxan-Copolymeren mit einem Gehalt an aktivem Wasserstoff von 2,55 Val/g zusammen mit 72,6 g eines Allylpolyoxyalkylenols (mittleres Molekulargewicht ca. 843 g/Mol, Propylenoxydanteil/Ethylenoxydanteil = 29 : 71) in 97,6 g destilliertem Wasser unter Rühren vorgelegt.
Die Reaktionsmatrix wird auf 70° C erwärmt, dann werden 3,5 mg Bis-$\mu$-chloro($\eta^2$-cyclohexen)platin(II)chlorid hinzugegeben. Nach ca. 30 Minuten ist ein quantitativer SiH-Umsatz erzielt. Erhalten wird eine klare, hell-bräunlich gefärbte Flüssigkeit mit einer dynamischen Viskosität von 268 mPas (25° C).

Beispiel 6 (erfindungsgemäß)

Entsprechend Beispiel 1 und 5 werden in einem 500-ml-Vierhalskolben, ausgestattet mit KPG-Rührer, Innenthermometer und Rückflusskühler 25,0 g eines Poly(methylhydrogen)dimethylsiloxan-Copolymeren mit einem Gehalt an aktivem Wasserstoff von 2,55 Val/g zusammen mit 72,6 g eines Allylpolyoxyalkylenols (mittleres Molekulargewicht ca. 843 g/Mol, Propylenoxydanteil/Ethylenoxydanteil = 29 : 71) in 97,6 g destilliertem Wasser unter Rühren vorgelegt.
Die Reaktionsmatrix wird auf 70° C erwärmt, dann werden 3,0 mg cis-Diamminoplatin(II)chlorid hinzugegeben. Nach 60 Minuten ist der gasvolumetrisch bestimmte SiH-Umsatz quantitativ.
Die klare, hell-bräunlich gefärbte Flüssigkeit besitzt eine dynamische Viskosität von 206 mPas (25° C).

Beispiel 7 (erfindungsgemäß)

In einem 500-ml-Vierhalskolben mit KPG-Rührer, Rückflusskühler und Innenthermometer werden 171 g eines Allylpolyoxyalkylenols mit einem mittleren Molekulargewicht von 843 g/Mol und einem Propylenoxidanteil von 26 % mit 171 g destilliertem Wasser unter Rühren auf 70° C erhitzt. Es werden 5 ppm Platin in Form eines gemäß EP-A-1 520 870 modifizierten Platin°-Katalysators mit einer Spritze hinzugegeben und im Anschluss 70 g eines Poly(methylhydrogen) dimethylsiloxan-Copolymeren mit einem Wasserstoffanteil von 2,52 Val/kg zügig über einen Tropftrichter zugegeben. Der gasvolumetrisch bestimmte Umsatz ist nach 1,5 Stunden quantitativ. Das Wasser wird bei 100 °C bis 120 °C abdestilliert. Man erhält ein klares und geruchsloses Produkt.

Beispiel 8 (nicht erfindungsgemäß)

In einem 500-ml-Vierhalskolben mit angeschlossenem KPG-Rührer, Rückflusskühler und Innenthermometer werden 195,6 g eines Allylpolyoxyalkylenols mit einem mittleren Molekulargewicht von 843 g/Mol und einem Propylenoxidanteil von 26 % mit 70 g eines Poly(methylhydrogen)dimethylsiloxan-Copolymeren mit einem Wasserstoffanteil von 2,52 Val/kg unter Rühren auf 70 °C erhitzt. Es werden 5 ppm Platin in Form eines gemäß EP-A-1 520 870 modifizierten Platin°-Katalysators mit einer Spritze zugegeben. Der gasvolumetrisch bestimmte Umsatz ist nach 2 Stunden quantitativ. Das erhaltene Produkt ist klar und weist einen für Polyethersiloxane charakteristischen Geruch auf.

Beispiel 9 (erfindungsgemäß)

In einem 500-ml-Vierhalskolben mit angeschlossenem KPG-Rührer, Rückflusskühler und Innenthermometer werden 179 g eines Allylpolyoxyalkylenols mit einem mittleren Molekulargewicht von 1.482 g/Mol und einem Propylenoxidanteil von 58 % mit 179 g destilliertem Wasser unter Rühren auf 70 °C erhitzt. Es werden 5 ppm Platin in Form eines gemäß EP-A-1 520 870 modifizierten Platin°-Katalysators mit einer Spritze hinzugegeben und im Anschluss 71 g eines Poly(methylhydrogen)dimethylsiloxan-Copolymeren mit einem Wasserstoffanteil von 1,27 Val/kg zügig über einen Tropftrichter zugegeben. Der gasvolumetrisch bestimmte Umsatz ist nach 2 Stunden quantitativ. Das Wasser wird bei 100 °C bis 120 °C abdestilliert. Das Produkt ist klar, geruchlos und hat eine Viskosität von 925 mPas.

Beispiel 10 (nicht erfindungsgemäß)

In einem 500-ml-Vierhalskolben mit angeschlossenem KPG-Rührer, Rückflusskühler und Innenthermometer werden 179 g eines Allylpolyoxyalkylenols mit einem mittleren Molekulargewicht von 1.482 g/Mol und einem Propylenoxidanteil von 58 % mit 71 g eines Poly(methylhydrogen)dimethylsiloxan-Copolymeren mit einem Wasserstoffanteil von 1,27 Val/kg unter Rühren auf 70° C erhitzt. Es werden 5 ppm Platin in Form eines gemäß EP-A-1 520 870 modifizierten Platin°-Katalysators mit einer Spritze hinzugegeben. Der gasvolumetrisch bestimmte Umsatz ist nach 2 Stunden quantitativ. Das Produkt ist klar, besitzt den charakterischen Geruch und eine Viskosität von 867 mPas.

Beispiel 11 (erfindungsgemäß)

In einem 500-ml-Vierhalskolben mit angeschlossenem KPG-Rührer, Rückflusskühler und Innenthermometer werden 162,5 g eines Allylpolyoxyalkylenols mit einem mittleren Molekulargewicht von 1.380 g/Mol und einem Propylenoxidanteil von 23 % mit 10 ppm eines gemäß EP-A-1 520 870 modifizierten Platin°-Katalysators versetzt. Nacheinander werden 29,2 g destilliertes Wasser und 100 g eines Poly(methylhydrogen)dimethylsiloxan-Copolymeren mit einem Wasserstoffanteil von 0,94 Val/kg unter Rühren zugegeben und die Reaktionsmischung auf 70°C erhitzt. Der gasvolumetrisch bestimmte Umsatz ist nach 2 Stunden quantitativ. Das wasserhaltige, hochviskose, in der Wärme fließfähige Produkt wird ohne Abdestillation von Wasser weiterverwendet.

Beispiel 12 (nicht erfindungsgemäß)

In einem 500-ml-Vierhalskolben mit angeschlossenem KPG-Rührer, Rückflusskühler und Innenthermometer werden 162,5 g eines Allylpolyoxyalkylenols mit einem mittleren Molekulargewicht von 1.380 g/Mol und einem Propylenoxidanteil von 23 % mit 100 g eines Poly(methylhydrogen)dimethylsiloxan-Copolymeren mit einem Wasserstoffanteil von 0,94 Val/kg unter Rühren auf 70° C erhitzt. 10 ppm eines gemäß EP-A-1 520 870 modifizierten Platin°-Katalysators werden zugegeben. Der gasvolumetrisch bestimmte Umsatz ist nach 2 Stunden quantitativ. Das Produkt ist klar und hat eine Viskosität von 12.810 mPas.

Beispiel 13 (erfindungsgemäß)

In einem 500-ml-Vierhalskolben mit angeschlossenem KPG-Rührer, Rückflusskühler und Innenthermometer werden 100,0 g eines $\alpha,\omega$-Dihydrogenpolydimethylsiloxans mit einem Wasserstoffanteil von 0,28 Val/kg und 46,2 g destilliertes Wasser vorgelegt. Die Mischung wird auf 70 °C erhitzt und mit 4 ppm eines gemäß EP-A-1 520 870 modifizierten Platin°-Katalysators versetzt. 54,0 g eines Allylpolyoxyalkylenols mit einem mittleren Molekulargewicht von 1.483 g/Mol und einem Propylenoxidanteil von 58 % werden innerhalb von 3 Minuten zugetropft. Der gasvolumetrisch bestimmte Umsatz ist nach 2 Stunden quantitativ. Das wasserhaltige, hochviskose, in der Wärme fließfähige Produkt wird ohne Abdestillation von Wasser weiterverwendet.

Beispiel 14 (nicht erfindungsgemäß)

In einem 500-ml-Vierhalskolben mit angeschlossenem KPG-Rührer, Rückflusskühler und Innenthermometer werden 81,0 g eines Allylpolyoxyalkylenols mit einem mittleren Molekulargewicht von 1.483 g/Mol und einem Propylenoxidanteil von 58 % auf 70° C erhitzt und mit 4 ppm eines gemäß EP-A-1 520 870 modifizierten Platin°-Katalysators versetzt. 150 g eines $\alpha,\omega$-Dihydrogenpolydimethylsiloxans mit einem Wasserstoffanteil von 0,28 Val/kg werden innerhalb von 5 Minuten zugetropft. Der gasvolumetrisch bestimmte Umsatz ist nach 2 Stunden quantitativ. Das Produkt ist klar und hat eine Viskosität von 4.255 mPas.

Beispiel 15 (erfindungsgemäß)

In einem 500-ml-Vierhalskolben mit angeschlossenem KPG-Rührer, Rückflusskühler und Innenthermometer werden 65,0 g Heptamethyltrisiloxan und 22,3 g destilliertes Wasser auf 80 °C erhitzt und mit 8 ppm eines gemäß EP-A-1 520 870 modifizierten Platin°-Katalysators versetzt. 158,0 g eines terminal sulfatmodifizierten Allylpolyethylenoxids mit einem mittleren Molekulargewicht von 400 g/Mol werden innerhalb von 30 Minuten zugetropft. Nach einer Stunde ist die Reaktionsmischung klar. Der gasvolumetrisch bestimmte Umsatz beträgt nach 8 Stunden 95,3 %. Es werden 4 ppm des Platin°-Katalysators zugegeben. Nach weiteren 2 Stunden erhält man 97,7 % Umsatz. Bei 130° C im Ölpumpenvakuum werden Wasser und kleine Restmengen nicht umgesetztes Heptamethyltrisiloxan abdestilliert. Das Produkt ist klar, gelb und besitzt eine Viskosität von 4.386 mPas.

Untersuchung auf im Polyethersiloxan gebundene Geruchsträger

Die Untersuchung auf gebundene und freie Aldehyde in Summe wird wie folgt durchgeführt:

3 g des zu prüfenden Produkts werden in 10 g destilliertem Wasser gelöst, mit 1 g 2%iger wässriger Zitronensäurelösung versetzt und 30 Minuten bei Raumtemperatur gerührt. Mit Hilfe einer gaschromatographischen Analyse werden die Aldehyde quantitativ bestimmt. Beispiel 7 stellt ein erfindungsgemäß in Wasser hergestelltes Polyethersiloxan dar und weist einen geringeren Gehalt an gebundenen Aldehyden auf als das konventionell in Substanz hergestellte Polyethersiloxan aus Beispiel 8.

| Beispiel | Propionaldehyd [ppm] | Acetaldehyd [ppm] |
|---|---|---|
| Beispiel 7 | 3.500 | < 1 |
| Beispiel 8 | 4.900 | 2 |

Anwendungstechnische Ausprüfung der styroloxidhaltigen Polyethersiloxane als Dispergieradditive in Lacksystemen

Eine schwarze Pigmentpaste basierend auf Printex 95 (Flammruß) wird wie folgt formuliert:

Tabelle 1:

| | |
|---|---|
| Destilliertes Wasser | 47,8 g |
| Additiv (als 40 %ige Lösung in Wasser) | 29,7 g |
| Foamex 830 | 1,0 g |
| Parmanetol K 40 | 0,1 g |
| Printex 95 | 20,0 g |

Unter Zusatz von Mahlkugeln werden die Pigmentformulierungen 2 Stunden lang in dem Disperser DAS 2000 der Firma Lau homogenisiert.

Es schließt sich die Einarbeitung der schwarzen Farbpaste in den Weißlack Neocryl XK-90 unter Nutzung eines hochtourigen Rührers an. Mit Hilfe eines 100-μ-Kastenrakels erfolgt der Auftrag des pigmentierten Lacksystems auf Prüfkarten. In der Trocknungsphase wird ein Rub-Out-Test durchgeführt, um die Effizienz der Stabilisierung der Dispersion zu prüfen.

Rub-out-Test:

Um insbesondere das vertikale Ausschwimmen von Pigmenten in Lackfilmen sichtbar und messbar zu machen, wird der sogenannte Rub-out-Test durchgeführt. Dazu reibt man den noch feuchten, aber bereits angezogenen Lackfilm mit dem Finger oder einem Pinsel. Haben sich die Pigmente entmischt oder liegen sie stark flockuliert vor, so wird durch den mechanischen Vorgang des Reibens wieder eine homogene Verteilung erzwungen. Es entsteht der angestrebte Farbton des homogenen Gemisches. An der Farbdifferenz zum ungeriebenen Film erkennt man das Ausmaß der Störung. Man kann sowohl einen positiven als auch einen negativen Rub-out-Effekt erhalten. Ein positiver Rub-out-Effekt bedeutet, dass die Farbstärke des ungeriebenen Films niedriger als die des geriebenen Films ist, was z. B. auf das Aufschwimmen von Weißpigment zurückgeführt werden kann. Bei einem negativen Rub-out-Effekt ist es umgekehrt.

Bestimmung der farbmetrischen Werte:

Die auf Kartonkarten (Leneta® Karte) aufgezogenen pigmentierten Lacke und Farben werden mittels eines Farbmessgerätes (Typ SP 60, Lichtart D 65/10, Firma X-Rite) in Form von L*a*b*-Werten d.h. Helligkeit, Farbstich auf der Rot/Grün-Skala, Farbstich auf der Gelb/Blau-Skala bestimmt (Tabelle 2).

Tabelle 2:

| | Standard | | | Differenz | | | | Glanz | |
|---|---|---|---|---|---|---|---|---|---|
| Probe | L* | a* | b* | ΔL* | Δa* | Δb* | ΔE* | 20 | 60 |
| Beispiel 3 (nicht erfindungsgemäß) | 48,59 | -0,77 | -2,28 | 1,18 | -0,04 | -0,35 | 1,23 | 39,8 | 72,8 |
| Beispiel 4 (erfindungsgemäß) | 50,44 | -0,83 | -2,57 | 0,41 | 0,00 | -0,19 | 0,45 | 44,0 | 74,6 |
| Referenz | 49,62 | -0,82 | -2,46 | 0,58 | 0,01 | -0,26 | 0,64 | 48,0 | 76,8 |

Der Beitrag der erfindungsgemäß hergestellten Dispergiermittel die Flockulationsneigung zu unterdrücken, kann - bei guten Helligkeits- und Glanzwerten - insbesondere an dem Ergebnis des Rub-Out-Tests des mit nach dem erfindungsgemäß beanspruchten Verfahren hergestellten Dispergieradditivs, mit 0,45 gegenüber 0,64 im Referenzsystem und 1,23 bei dem nicht erfindungsgemäß hergestellten System, eindrucksvoll ersichtlich gemacht werden.

Anwendungstechnische Ausprüfung des erfindungsgemäß hergestellten Polyethersiloxans als Polyurethanhartschaumstabilisator

Das in Beispiel 7 beschriebene, erfindungsgemäße Polyethersiloxan wurde im Vergleich zum konventionell hergestellten Polyethersiloxan aus Beispiel 8 als PU-Hartschaumstabilisator in folgender Rezeptur verschäumt:

| Masse [g] | Komponente |
|---|---|
| 95,0 | Sorbit/Glycerin-gestartetes Polyetherpolyol (OH-Zahl 470) |
| 2,5 | Wasser |
| 1,4 | Dimethylcyclohexylamin |
| 1,4 | Stabilisator |
| 12,4 | Cyclopentan |
| 188,6 | polymeres MDI (NCO-Gehalt 31,6 %) |

Die Rezeptur wurde im Handmischverfahren verschäumt. Dazu wurden Polyol, Wasser, Amin-Katalysator, konventionell bzw. erfindungsgemäß hergestellter Stabilisator und Treibmittel in einen Becher eingewogen und mit einem Tellerrührer (6 cm Durchmesser) 30 s bei 1.000 upm vermischt. Durch erneutes Abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 7 s bei 2.500 upm verrührt und sofort in eine mit Polyethylenfolie ausgekleidete, auf 45 °C beheizte Form von 145 cm x 14,5 cm x 3,5 cm Größe gegeben. Die Form hatte entlang ihrer längsten Seite einen Neigungswinkel von 10°, eingefüllt wurde in 40 cm Abstand vom tiefer liegenden Ende. (Die Menge der Schaumformulierung und das Volumen der Form sind so bemessen, dass der Schaum die Form nicht vollständig ausfüllt und die Länge des entstehenden Schaumformkörpers als Maß für das Volumenfließen des Schaums angesehen werden kann.) Nach 10 min wurde der Schaum entformt und beurteilt. Oberfläche und Innenstörungen wurden subjektiv bewertet, wobei Noten von 1 (am schlechtesten) bis 10 (am besten) vergeben wurden. Die Porenstruktur (mittlere Zahl der Zellen pro 1 cm) wurde auf einer Schnittfläche optisch durch Vergleich mit Vergleichsschäumen beurteilt. Die Länge des Schaumformkörpers wurde gemessen und nach folgender Formel auf ein Standard-Schaumgewicht (260 g) und Normaldruck (1.013 mbar) normiert:

Normierte Fließlänge =

(260 g * Schaumlänge * Luftdruck)/(Schaumgewicht * 1.013 mbar)

Ergebnisse:

| Stabilisator | T | S | B | I | Z | G | H | D | L | Δ L |
|---|---|---|---|---|---|---|---|---|---|---|
| Beispiel 7 | 1,5 | 5 | 4-5 | 4 | 36-40 | 259,5 | 136,5 | 763 | 137,3 | -0,2 % |
| Beispiel 8 | 1,5 | 5 | 4 | 4 | 36-40 | 257,4 | 136 | 763 | 137,6 | - |

T = Teile S = Oberfläche B = Bodenzone
I = Innenstörungen Z = Porenstruktur [Zellen/cm]
G = Schaumgewicht H = Schaumhöhe D = Luftdruck [torr]
L = Normierte Fließlänge gemäß obiger Definition
Δ L = Fließdifferenz

Anwendungstechnische Ausprüfung des erfindungsgemäß hergestellten Polyethersiloxans als Polyurethanweichschaumstabilisator

Die anwendungstechnische Prüfung des in Beispiel 9 beschriebenen, erfindungsgemäß hergestellten Polyethersiloxans im Vergleich zum konventionell hergestellten Polyethersiloxan aus Beispiel 10 erfolgte mit einer Schaumrezeptur auf folgende Weise:

Jeweils 100 Gewichtsteile eines handelsüblichen Polyethers zur Herstellung von flexiblen Polyurethanschaumstoffen (OH-Zahl: 56 mg/g), welcher im mittleren Molekül drei Hydroxygruppen aufwies und ein Molekulargewicht von ca. 3.500 g/Mol hatte, wurde mit 4,05 Gew.-Teilen Wasser, 1,2 Gew.-Teilen des zu testenden Polyethersiloxans, 0,2

Gewichtsteilen Dimethylethanolamin und 0,2 Gewichtsteilen Zinnoktoat mit einem Tellerrührer vermischt. Nach Zugabe von 52,5 Gewichtsteilen Toluoldiisocyanat (Isomerengemisch 2,4 zu 2,6 im Verhältnis 4 : 1)wurde mit einem Rührer 7 Sekunden bei 2.500 U/min homogenisiert und das Gemisch in eine oben offene Box (30 x 30 x 30 cm) gegossen. Es entsteht ein Polyurethan-Schaumstoff. Der Einfluss des Polyethersiloxans auf den Verschäumungsprozess wird durch folgende Meßgrößen beschrieben:

1. Das Rücksacken des Schaumstoffs am Ende der Steigphase (gemessen als Differenz zwischen der Höhe zum Zeitpunkt des Abblasens und der Höhe 3 Minuten später) wird im Folgenden auch als "Rückfall" bezeichnet.

2. Die Zahl der Zellen pro Zentimeter Schaum wird mittels Mikroskop bestimmt.

3. Die Offenporigkeit des Schaumstoffs wird mittels einer Staudruckmessung bestimmt und ist Stand der Technik. Dabei wird der Staudruck in mm Wassersäule gemessen.

Folgende Tabelle stellt die Messwerte des nach dem erfindungsgemäßen Beispiel 9 sowie nach dem nicht erfindungsgemäßen Beispiel 10 gewonnenen Stabilisators gegenüber:

| Stabilisator | T | R | Z | St | G | P |
|---|---|---|---|---|---|---|
| Beispiel 9 | 1,2 | -0,2 | 16 | 97 | 25,7 | 9 |
| Beispiel 10 | 1,2 | -0,1 | 16 | 100 | 25,6 | 10 |

T = Teile Stabilisator R = Rückfall [cm]
Z = Zellen pro Zentimeter St = Steigzeit [s]
G = Raumgewicht [kg/$m^3$] P = Staudruck [mm]

Anwendungstechnische Ausprüfung des erfindungsgemäß hergestellten Polyethersiloxans als Textilhilfsmittel

Polyethermodifizierte Siloxane werden als Additive in Textilhilfsmittelformulierungen und "topical softener" Anwendungen von Tissue Papier eingesetzt. In beiden Anwendungsbereichen verleihen diese den Geweben bzw. Papier eine glatte Oberfläche und erzeugen somit einen weichmachenden Effekt. Das erfindungsgemäß hergestellte Polyethersiloxan aus Beispiel 11 ist in seiner Eigenschaft als Zusatz in Textilhilfsmitteln und als Topical Softener auf Tissuepapier sowohl in der Formulierbarkeit als auch der Applikation vergleichbar mit dem konventionell hergestellten Polyethersiloxan aus Beispiel 12.

Formulierbarkeit

Aus den Polyethersiloxanen der Beispiele 11 und 12 werden bei Raumtemperatur durch Zugabe destillierten Wassers unter Rühren mit einer Dissolverscheibe 35 %ige Lösungen hergestellt. In beiden Fällen wird ein klares bis leicht trübes Produkt mit einer Viskosität von ca. 100 mPas bei 20 °C erhalten.

Applikation - Verwendung als hydrophile Komponente in einer Weichmacherformulierung für Textilgewebe und Non-Wovens

Die jeweils gleichen Mengen des erfindungsgemäß hergestellten Polyethersiloxans aus Beispiel 11 und des konventionell hergestellten Polyethersiloxans aus Beispiel 12 werden in eine Standardformulierung wie folgt eingearbeitet: 5,2 Teile eines nicht ionischen Emulgators (z.B. ein Polyethylenglykolalkoxylat, das sich von einem Fettalkohol und zehn Ethylenglykoleinheiten ableitet), 8,5 Teile Butyldiglykol und 16,6 Teile Polyethersiloxane werden ins Becherglas gegeben und bei 35 bis 40 °C unter Rühren homogenisiert. Anschließend werden bei Raumtemperatur 57,3 Teile Wasser unter Rühren langsam hinzugegeben. Zuletzt werden 12,3 Teile eines auf 45 bis 50°C erwärmten Siliconquats portionsweise langsam untergerührt. Die Mischung wird bei 45 bis 50 °C für 30 Minuten gerührt und nach dem Abkühlen abgefüllt. Von der so hergestellten Formulierung werden auf Baumwoll-Webware, -Wirkware und -Frottierware durch Foulardauftrag zwischen 0,003 g Produkt pro Gramm Textilware (Griffmuster) und 0,025 g Produkt pro Gramm Textilware (Rücknetzvermögen) appliziert. Verglichen werden die Griffeigenschaft (Paneltest, 25 = am besten, 0 = schlecht) auf verschiedenen Gewebetypen und das Rücknetzvermögen (Steighöhenmethode). Die Tabelle dokumentiert eine vergleichbare Qualität des erfindungsgemäß und konventionell hergestellten Polyethersiloxans.

| Formulierung mit | Bsp. 12 | Bsp. 11 |
|---|---|---|
| Weichgriff - Frottierstoff (Summenpunkte max. 25) | 14 | 13 |
| Weichgriff- Wirkware (Summenpunkte max. 25) | 19 | 20 |
| Rücknetzverhalten (% Blindwert) | 83 | 80 |

Applikation - Aufsprühen auf Tissue-Papier Kurzfaser/Langfaser 1/1

Aus dem erfindungsgemäß hergestellten Polyethersiloxan (Beispiel 11) und dem konventionell hergestellten Polyethersiloxan (Beispiel 12) wird jeweils eine 10 %ige Lösung in Wasser hergestellt und gleiche Mengen über Aufsprühen auf Papierblätter appliziert. Nach Trocknung und Klimatisierung bei 21 °C und 50 % rel. Luftfeuchte werden die Reißfestigkeit, die Wasseraufnahme und die Weichheit (Paneltest, 35 am besten, 0 schlecht) verglichen. Die Ergebnisse aus der Tabelle dokumentieren eine vergleichbare Produktqualität.

| Verdünnung mit | Bsp. 12 | Bsp.11 |
|---|---|---|
| Weichheit (Summenpunkte max. 35) | 30 | 29 |
| Absorption (0-5 s; g/g/s) | 0,17 | 0,16 |
| Absorptionskapazität (20 s; g/g) | 1,95 | 1,85 |
| Reißfestigkeit (kNm/kg) | 1,80 | 1,85 |

## Patentansprüche

**1.** Verfahren zur Herstellung von organisch modifizierten Siloxanen und Silanen durch Edelmetall-katalysierte Umsetzung von

a) mindestens eine SiH-Gruppe aufweisenden Siloxanen und/oder Silanen mit
b) Verbindungen die eine Doppelbindung pro Molekül aufweisen,
**dadurch gekennzeichnet, dass** die Reaktion in
c) Wasser als Reaktionsmedium

durchgeführt wird.

**2.** Verfahren zur Herstellung von organisch modifizierten Siloxanen und Silanen gemäß Anspruch 1, **dadurch gekennzeichnet, dass** ein oder mehrere Siloxane, die nicht-terminale SiH-Gruppen aufweisen, als Komponente a) eingesetzt werden.

**3.** Verfahren zur Herstellung von organisch modifizierten Siloxanen und Silanen gemäß mindestens einem der Ansprüche 1 bis 2, **dadurch gekennzeichnet, dass** die Reaktion katalysiert wird durch Metallkomplexe der VIII. Nebengruppe des PSE.

**4.** Verfahren zur Herstellung von organisch modifizierten Siloxanen und Silanen gemäß mindestens einem der Ansprüche 1 bis 3, **dadurch gekennzeichnet, dass** die Reaktion katalysiert wird durch Metallkomplexe der Platinmetalle.

**5.** Verfahren zur Herstellung von organisch modifizierten Siloxanen und Silanen gemäß mindestens einem der Ansprüche 1 bis 4, **dadurch gekennzeichnet, dass** die Reaktion katalysiert wird durch Metallkomplexe vom Karstedt-Typ.

**6.** Wässrige Reaktionsmischungen, hergestellt durch Edelmetall-katalysierte Umsetzung von

a) mindestens eine SiH-Gruppe aufweisenden Siloxanen und/oder Silanen mit
b) Verbindungen die eine Doppelbindung pro Molekül aufweisen,

in Gegenwart von
c) Wasser als Reaktionsmedium

gemäß mindestens einem der Ansprüche 1 bis 5.

**7.** Verwendung der wässrigen Reaktionsmischungen gemäß Anspruch 6 zur Herstellung von Reinigungs- und Pflegeformulierungen für die Anwendung in Pharmazie, Haushalt und Industrie.

**8.** Verwendung der wässrigen Reaktionsmischungen gemäß Anspruch 6 als Pigmentnetzmittel oder Dispergieradditive zur Herstellung von homogenen, lagerstabilen Pasten, Farben, Lacken, Überzügen, Beschichtungen, Anstrichmitteln.

**9.** Verwendung der wässrigen Reaktionsmischungen gemäß Anspruch 6 als Schaumstabilisatoren oder Schaumadditive für Polyurethanschäume, insbesondere Polyurethanhartschäume und Polyurethanweichschäume.

**10.** Verwendung der wässrigen Reaktionsmischungen gemäß Anspruch 6 als Griffverbesserer oder Imprägniermittel bei der Behandlung und Nachbehandlung von Textilien.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6878733 B
- DE 2646726 B
- EP 0075703 A
- US 3516946 A
- US 4288345 A
- US 3814730 A
- WO 9800463 A
- US 3775452 A
- EP 1520870 A
- EP 0118824 A
- JP 07304627 A
- DE 4116419 A
- EP 0398684 A
- JP 60018525 A
- EP 0308260 A
- JP 09012723 A
- EP 1431331 A
- US 6437162 B


### In der Beschreibung aufgeführte Nicht-Patentliteratur


- **MICHAEL A. BROOK.** Silicon in Organic, Organometallic and Polymer Chemistry. John Wiley and Sons, Inc, 1999, S. 176, S. 406
- Chemical Communications. Cambridge, United Kingdom, 2003, vol. 14, 1668-1669
- Chemie und Technologie der Silicone. Verlag Chemie, 1960, 43
- Chemie und Technologie der Silicone. Verlag Chemie, 1960
- *J. Soc. Cosmet. Chem. Japan,* 1993, vol. 27 (3), 297-303